Europäisches Patentamt

European Patent Office

Office européen des brevets

(11) Veröffentlichungsnummer: **0 143 377**
**A1**

(12) **EUROPÄISCHE PATENTANMELDUNG**

(21) Anmeldenummer: **84113511.4**

(22) Anmeldetag: **09.11.84**

(51) Int. Cl.⁴: **A 47 C 3/28,** A 47 B 9/08

(30) Priorität: **12.11.83 DE 3341088**

(43) Veröffentlichungstag der Anmeldung: **05.06.85**
**Patentblatt 85/23**

(84) Benannte Vertragsstaaten: **AT BE CH DE FR GB IT LI LU NL SE**

(71) Anmelder: **Heckmann, Peter, Stangenstrasse 20, D-7022 Leinfelden-Echterdingen (DE)**

(72) Erfinder: **Heckmann, Peter, Stangenstrasse 20, D-7022 Leinfelden-Echterdingen (DE)**

(74) Vertreter: **Wilhelm, Hans-Herbert, Dr.-Ing. et al, Patentanwälte Dr.-Ing. Hans-Herbert Wilhelm Dipl.-Ing. Hanjörg Dauster Gymnasiumstrasse 31B, D-7000 Stuttgart 1 (DE)**

(54) **Feststellvorrichtung für ineinander verschiebbare Teleskopbeine höhenverstellbarer Möbel.**

(57) Eine Feststellvorrichtung für ineinander verschiebbare Teleskopbeine höhenverstellbarer Möbel weist zwei nach dem Kniehebelprinzip zusammenwirkende Hebel (5a, 5b) auf, welche durch Öffnungen des Innenrohres (2) Bremsbacken (7a, 7b) gegen das Außenrohr (1) drücken. Die Feststellvorrichtung kann sehr einfach durch Verschwenkung der Kniehebel (5a, 5b) gelöst werden. Im Drehpunkt der Kniehebel kann eine Achse (6) vorgesehen sein, welche in einem Zusatzkörper (9) gelagert ist. Dieser Zusatzkörper (9) steht unter der Vorspannung einer Feder (10), welche die Kniehebel (5a, 5b) in ihre Feststellposition preßt. Durch Ausüben einer Kraft in entgegengesetzter Richtung zur Kraftwirkung dieser Feder kann die Verbindung gelöst werden. Hierfür kann eine von einem zweiarmigen Hebel (12) beaufschlagte Stange vorgesehen sein. Eine derartige Feststellvorrichtung zeichnet sich insbesondere durch hohe Reibungsbeiwerte aus und ist daher auch für hohe Auflagegewichte geeignet.

Feststellvorrichtung für ineinander verschiebbare Teleskopbeine höhenverstellbarer Möbel
==========================================================

Die Erfindung betrifft eine Feststellvorrichtung für ineinander
verschiebbare Teleskopbeine höhenverstellbarer Möbel, insbesondere verstellbarer Tische oder Stühle.

Verstellbare Teleskopbeine sind insbesondere in der Anwendung
bei Bürostühlen bekannt. Üblicherweise ist hierbei das äußere
Teleskoprohr als Standrohr ausgeführt und an seinem unteren Ende
mit Abstützvorrichtungen, wie beispielsweise sternförmig auseinanderlaufenden Armen, verbunden, während das innere Teleskoprohr
mit der Sitzfläche bzw. - bei Tischen - mit der Tischplatte verbunden ist. Das innere Teleskoprohr gleitet in dem äußeren Teleskoprohr, so daß eine Höhenverstellung möglich ist.

Zur Einstellung der gewünschten Sitz- oder Arbeitsposition ist
es erforderlich, das innere Teleskoprohr gegenüber dem äußeren
Teleskoprohr in einer bestimmten Stellung zu fixieren. Hierzu
werden Feststellvorrichtungen verschiedenster Bauart verwendet.
Nach dem Lösen einer derartigen Vorrichtung gleitet das innere
Teleskoprohr und damit die Sitz- oder Arbeitsplatte nach unten
und muß dann von Hand auf die gewünschte Höhe gebracht werden.
Diese gewünschte Höhe wird dann durch die Aktivierung der Feststellvorrichtung fixiert. Bei moderneren Ausführungen ist überdies eine Feder, beispielsweise eine Spiralfeder oder eine Gasfeder, vorgesehen, die auf das innere Teleskoprohr eine nach
oben gerichtete Kraft in Längsrichtung dieses Teleskoprohrs ausübt. Die Kraftwirkung dieser Feder kann dabei so bemessen sein,
daß sich das innere Teleskoprohr nach dem Lösen der Feststellvorrichtung stets nach oben bewegt. Diese Ausbildung wird insbesondere bei Bürostühlen bevorzugt. Die richtige Sitzposition wird dann dadurch eingestellt, daß die Sitzfläche belastet und
in der richtigen Höhe fixiert wird. Die Kraft der auf das
innere Teleskoprohr wirkenden Feder kann aber auch so bemessen
sein, daß sie das Gewicht der Sitz- oder Arbeitsfläche gerade
kompensiert. Eine Höhenverstellung ist dann nahezu ohne Kraftaufwand möglich. Eine derartige Federeinstellung wird insbesondere bei größerem Gewicht der Sitz- oder Arbeitsfläche, vorzugsweise bei Tischen, benutzt.

Für die Ausbildung der Feststellvorrichtung zur gegenseitigen
Fixierung der Lage der Teleskopbeine sind bereits verschiedene
Vorschläge gemacht worden. Die DE-OS 26 07 144 schlägt beispielsweise vor, das äußere Teleskoprohr über einen bestimmten Bereich
als Wellrohr auszu-bilden. In die Sicken dieses Wellrohrs greifen Vorsprünge einer Klemmhülse, welche durch das konisch zulaufende innere Teleskoprohr aufgeweitet wird. Durch Verschieben der Klemmhülse entlang dem Konus lassen sich die Vorsprünge
aus den Sicken lösen, so daß eine Höhenverstellung möglich wird.
Das Verschieben der Klemmhülse wird dabei durch eine axial im
Inneren des inneren Teleskoprohrs verlaufende federbeaufschlagte
Stellstange, welche ihrerseits von einem gekröpften Hebel beaufschlagt wird, ermöglicht.

Bei einer derartigen Feststellvorrichtung ist eine stufenlose
Höhenverstellung nicht möglich, da die Vorsprünge der Klemmhülse
nur dann eine Fixierung erlauben, wenn sie in entsprechenden
Sicken des äußeren Wellrohrs zur Anlage kommen. Die Ausbildung
des äußeren Teleskoprohrs als Wellrohr führt ferner zu einem
ungünstigen optischen Effekt.

Eine weitere Feststellvorrichtung der genannten Art ist in der
DE-OS 24 06 338 beschrieben. Dort ist in dem Innenrohr ein zusätzlicher stangen- oder rohrförmiger Körper vorgesehen, der an
seinem unteren Ende in einen Konus ausläuft. Am unteren Ende des
inneren Teleskoprohrs sind eine Anzahl von Radialbohrungen vorgesehen, in denen Kugeln gelagert sind. Durch den Konus des zylindrischen Körpers werden diese Kugeln gegen das Außenrohr gepreßt. Die so entstandene Fixierung läßt sich durch Axialverschiebung des zylindrischen Körpers oder auch des inneren Teleskoprohrs lösen, da hierbei die Kugeln auf der Oberfläche des Konus gleiten.

Eine derartige Verstellvorrichtung ist aufgrund des zusätzlichen zylindrischen Körpers und auch der verwendeten Kugeln einschließlich ihrer Lagerungen konstruktiv aufwendig. Außerdem kann die reibschlüssige Verbindung mittels Kugeln in einer Richtung nur begrenzten Belastungen ausgesetzt werden, was insbesondere dann nachteilig ist, wenn beispielsweise eine Tischplatte federbelastet nach oben gedrückt wird, wo eine Belastung in beiden Richtungen erfolgt. Diese Verstellvorrichtung kann daher nur bei Anordnungen verwendet werden, die keinen Gewichtsausgleich durch Federn aufweisen, beispielsweise einem einfachen Stuhl. Für Anordnungen mit Gewichtsausgleich - z.B. einem Tisch, dessen Tischplatte ein hohes Gewicht aufweist, wie bei einer Marmortischplatte - und die deshalb einen Gewichtsausgleich durch Federn o.dgl. benötigen, ist sie jedoch ungeeignet.

Die Erfindung hat sich die Aufgabe gestellt, die Nachteile der bekannten Ausführungen zu vermeiden und eine Feststellvorrichtung anzugeben, die mechanisch einfach aufgebaut ist, stark belastet werden kann und eine stufenlose Höhenverstellung zuläßt. Diese Aufgabe wird erfindungsgemäß dadurch gelöst, daß im Inneren des Innenrohrs zwei Kniehebel angeordnet sind, die in der Feststellposition je mindestens eine Bremsbacke durch Öffnungen des Innenrohrs gegen das Außenrohr pressen und die durch Verschwenkung in Richtung der Längsachse des Innenrohrs gelöst werden können. Die Verwendung von Bremsbacken gewährleistet einen hohen Reibungsbeiwert, so daß die Teleskopbeine in beiden Richtungen stark belastet werden können. Die Verwendung von Kniehebeln, die diese Bremsbacken gegen das Außenrohr pressen, stellt eine konstruktiv besonders einfache Lösung dar. Die Die Feststellwirkung läßt sich nämlich einfach dadurch aufheben, daß die Kniehebel axial zum inneren Teleskoprohr verschwenkt werden. Eine stufenlose Verstellung ist ohne weiteres möglich und kann ohne erheblichen Kraftaufwand durchgeführt werden.

Die Kniehebel können vorteilhaft in ihrem gemeinsamen Drehpunkt auf einer in Längsrichtung des Innenrohrs bewegbaren Achse gelagert sein. In diesem Fall definiert die Lage dieser Achse die von den Kniehebeln auf die Bremsbacken ausgeübte Kraft. Die Feststellvorrichtung kann somit durch Verlagerung dieser Achse in Längsrichtung der Teleskopbeine gelöst bzw. eingerückt werden.

Es ist möglich, lediglich die Achse der Kniehebel beispielsweise in entsprechend angebrachten Längsschlitzen zu verschieben. Günstig ist es jedoch auch, wenn die Achse in einem längsverschiebbar im Innenrohr geführten Körper gelagert ist. In diesem Fall kann ein Lösen bzw. Festsetzen der Feststellvorrichtung durch Verschiebung dieses Körpers in Längsrichtung der Teleskopbeine erreicht werden, da dieser Körper die Achse der Kniehebel entsprechend führt.

Zur Positionierung der Knie-hebelachse bzw. des diese Achse führenden Körpers wird vorteilhaft ein Federelement vorgesehen, das in Längsrichtung des Innenrohrs wirkt und die Achse bzw. den Körper in die Feststellposition preßt. Die Achse bzw. der Körper werden somit im nicht betätigten Zustand stets in eine Position gedrückt, bei der die Kniehebel maximal oder nahezu maximal gespreizt sind und sich aufgrund dessen eine maximale Bremswirkung ergibt. Für das Federelement wird vorzugsweise eine Spiralfeder vorgesehen, doch sind hier auch andere Federelemente verwendbar. Zum Lösen der Feststellvorrichtung muß die Achse oder der Körper dann mit einer Kraft beaufschlagt werden, die der Federkraft entgegenwirkt und so eine Verkippung der Kniehebel ermöglicht. Gemäß einer vorteilhaften Weiterbildung der Erfindung wird hierfür eine im Innenrohr axial verschiebbare Stange o.dgl. vorgesehen, die an der Achse oder dem Körper anliegt und diese oder diesen durch Ausüben einer Kraft in entgegensetzter Richtung zur Kraftwirkung des Federelementes aus ihrer Feststellposition lösen kann. Eine axiale Verschiebung dieser Stange bewirkt also das Lösen bzw. das Festsetzen der Feststellvorrichtung. Vorteilhaft ist es weiterhin, einen zweiarmigen Hebel vorzusehen, der zur Betätigung dieser Stange dient. Dieser zweiarmige Hebel ist an dem Innenrohr gelagert, vorzugsweise knapp unterhalb der Sitz- oder Arbeitsfläche des Möbels. Sein nach außen stehendes Ende dient zur manuellen Betätigung der Feststellvorrichtung und ist daher in der Regel mit einem Griff o.dgl. versehen, während sein innenliegendes Ende bei Betätigung mit der Stange in Kontakt kommt und auf diese die zum Lösen der Feststellvorrichtung notwendige Kraft ausübt.

Eine gute Funktion der Kniehebel und eine einwandfreie Kraftübertragung von diesen Kniehebeln auf die Bremsbacken läßt sich erreichen, wenn die Kniehebel auf ihren den Bremsbacken zugewandten Seiten mit Spitzen versehen sind, die in entsprechenden Konen der Bremsbacken greifen. Es ist auch vorteilhaft, die Kniehebel an den Bremsbacken anzulenken.

Weitere Merkmale und Vorteile der Erfindung ergeben sich aus den Unteransprüchen sowie aus der Beschreibung zur Zeichnung, in der eine bevorzugte Ausführungsform der Erfindung dargestellt ist. Es zeigen:

Fig. 1    einen mit einer erfindungsgemäßen Feststellvorrichtung versehenen höhenverstellbaren Tisch im Querschnitt, wobei der Tisch ausge-fahren und die Feststellvorrichtung festgesetzt ist,

Fig. 2    einen Querschnitt gemäß der Bezugslinie II-II der Fig. 1,

Fig. 3    einen Querschnitt gemäß der Bezugslinie III-III der Fig.1,

Fig. 4    die Verbindung der beiden Kniehebel,

Fig. 5    den Querschnitt durch den höhenverstellbaren Tisch gemäß der Fig. 1, wobei die Feststellvorrichtung gelöst ist

Fig. 6    den Querschnitt durch den höhenverstellbaren Tisch im eingefahrenen Zustand mit festgesetzter Feststellvorrichtung und

Fig. 7    einen Querschnitt durch eine weitere Ausführungsform der Erfindung.

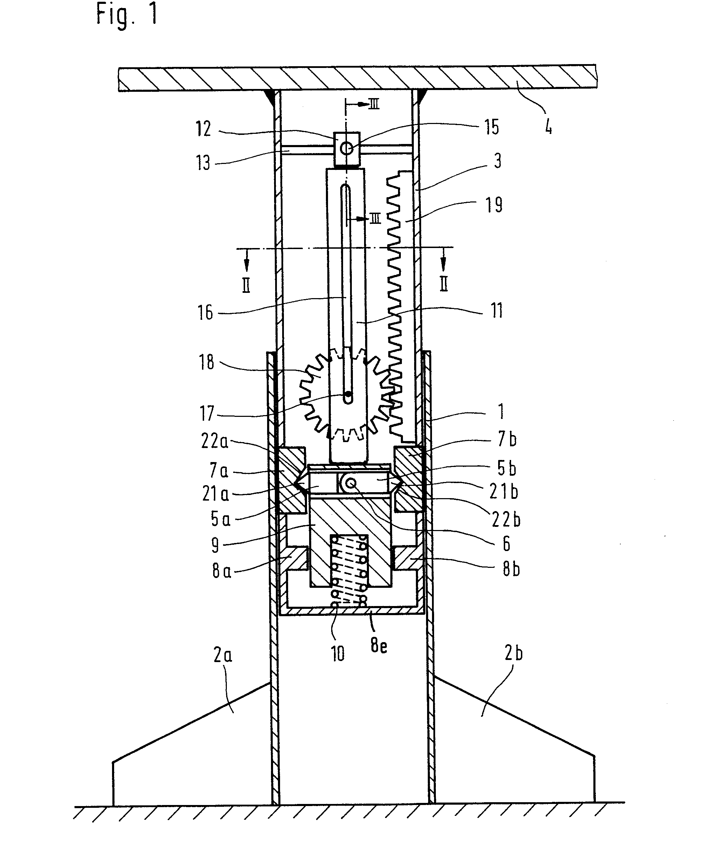

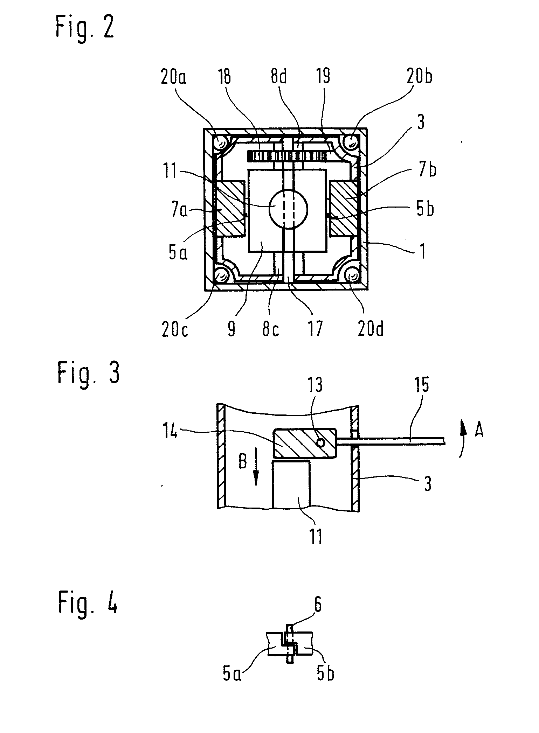

In der Fig. 1 ist ein Querschnitt durch einen höhenverstellbaren Tisch gezeigt, wobei aus Darstellungsgründen für die horizontale und die vertikale Achse verschiedene Maßstäbe gewählt wurden. Die Höhenverstellung wird durch zwei ineinander verschiebbare Teleskopbeine erreicht. Das Außenrohr 1 dient als Standrohr und ist mit Füßen 2a und 2b verbunden, auf die nicht näher eingegangen zu werden braucht. Das Innenrohr 3 ist gegenüber dem Außenrohr 1 axial verschiebbar und trägt an seinem oberen Ende die hier nur ausschnittsweise gezeigte Tischplatte 4. Außen- und Innenrohr können im Prinzip von beliebigem Querschnitt, beispielsweise kreisförmigem oder rechteckförmigem Querschnitt, sein. Im gezeigten Ausführungsbeispiel wurde, wie aus der Fig. 2 zu erkennen ist, ein quadratischer Querschnitt gewählt.

Innen- und Außenrohr können gleitend ineinander geführt sein, Es ist je-doch insbesondere bei hohem Gewicht der Tischplatte 4 auch von Vorteil, stattdessen Wälzlagerungen vorzusehen. Aus der Fig. 2 ist zu erkennen, daß am Innenrohr 3 hierzu Kugeln gelagert sind, die an der Innenseite des Außenrohrs 1 abrollen.

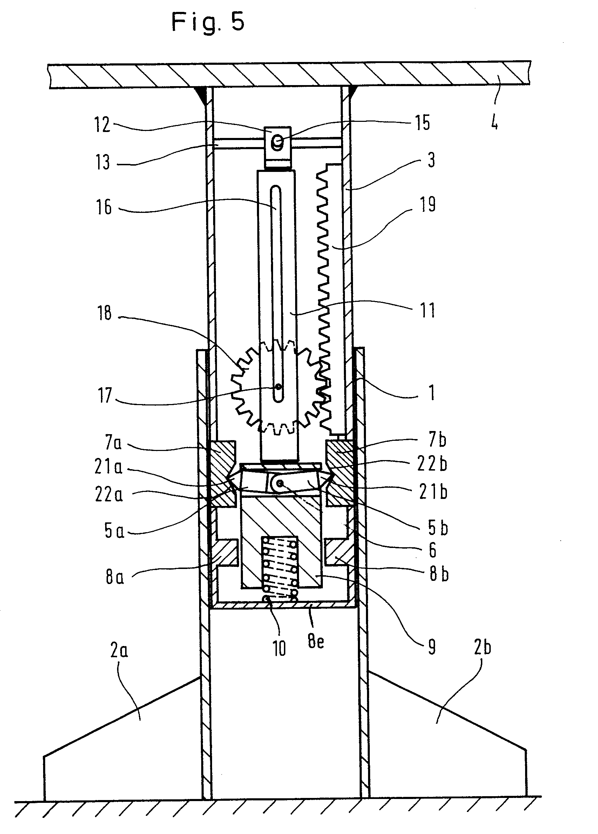

Zur Fixierung einer bestimmten Höheneinstellung der Tischplatte 4 sind Kniehebel 5a und 5b vorgesehen, die, wie insbesondere aus der Fig. 4 zu erkennen ist, eine gemeinsame Achse 6 besitzen und die zwei Bremsbacken 7a und 7b durch Öffnungen des Innenrohrs 3 gegen das Außenrohr 1 pressen. Mit einer derartigen Anordnung lassen sich sehr hohe Reibungsbeiwerte zwischen den Bremsbacken und dem Außenrohr erzielen, so daß die Feststellvorrichtung auch bei hoher Belastung, beispielsweise bei Verwendung einer Marmor-Tischplatte, zuverlässig wirkt.

Zum Lösen der Feststellvorrichtung ist es lediglich notwendig, die Achse 6 der Kniehebel in Längsrichtung der Teleskopbeine zu verschieben. Beispielsweise wäre es möglich, eine Gabel vorzusehen, welche an den die Kniehebel überragenden Enden der Achse 6 angreift. Im Ausführungsbeispiel wurde allerdings ein anderer Weg gewählt. Dort ist ein in Axialführungen 8a und 8b des Innenrohrs 3 längsverschiebbarer Körper 9 vorgesehen, der Bohrungen aufweist, in denen die äußeren Enden der Achse 6 gelagert sind. Auf diesen Körper wirkt die Kraft einer Spiralfeder 10. Diese Spiralfeder 10 drückt den Körper 9, wie in Fig.1 gezeigt, in eine obere Endlage. In dieser oberen Endlage sind
die Kniehebel gespreizt, so daß sich eine maximale Bremswirkung
ergibt. Definiert wird die obere Endlage durch einen Anschlag,
der die weitere Bewegung des Körpers 9 nach oben hemmt. Prinzipiell wäre es hierzu möglich, beispielsweise am Innenrohr 3
Elemente vorzusehen, die den Weg des Körpers 9 begrenzen. Im
Ausführungsbeispiel wird dieser Weg durch eine Stange 11 begrenzt, welche ihrerseits an dem zweiarmigen Hebel 12 anschlägt.
Dieser zweiarmige Hebel 12 sitzt auf einer am Innenrohr 3 gelagerten Welle 13. Ein Arm 14 (Fig. 3) des Hebels 12 steht im
Inneren des Innenrohrs 3 in Kontakt mit der Stange 11, während
der anderen Arm 15 durch eine Öffnunge im Innenrohr 3 nach außen
ragt und dort in hier nicht gezeigter Weise mit einem Griff o.dgl.
versehen ist. Der Arm 15 schlägt an der unteren Kante der im Innenrohr 3 vorgesehenen Öffnung an und bildet damit über die Stange 11 zugleich einen Anschlag für den Körper 9. Der untere Anschlag des Körpers 9 wird durch die Bodenfläche 8e des Innenrohrs 3 gebildet.

Die Stange 11 weist eine schlitzförmige Öffnung 16 auf, durch
die die Achse 17 eines Zahnrades 18 führt. Die Achse 17 ist
durch weitere schlitzförmige Öffnungen des Innenrohrs 3 geführt
und am Außenrohr 1 gelagert oder befestigt. Eine hier nicht gezeigte Feder übt auf das Zahnrad 18 ein im Ausführungsbeispiels
der Fig. 1 im Gegenuhrzeigersinn gerichtetes Drehmoment aus.
Das Zahnrad 18 steht im Eingriff mit einer am Innenrohr 3 befestigten Zahnstange 19. Nach dem Lösen der Feststellvorrichtung
übt somit das Zahnrad 18 über die Zahnstange 19 auf das Innenrohr
3 eine nach oben gerichtete Kraft aus. Diese Kraftwirkung ist der
Wirkungsrichtung des Gewichts der Tischplatte 4 entgegengesetzt
und erleichtert somit die Höheneinstellung nach dem Lösen der
Feststellvorrichtung. Die von dem Zahnrad 18 aufgeb-rachte Kraft
kann beispielsweise so bemessen sein, daß die Tischplatte 4 nach
dem Lösen der Feststellvorrichtung nach oben fährt. Sie wird in
diesem Fall durch leichten Druck von oben in die gewünschte
Position gefahren und dort festgesetzt. Sehr vorteilhaft ist es
jedoch auch, wenn die von dem Zahnrad 18 ausgeübte Kraft genau
dem Gewicht der Tischplatte 4 entspricht. Nach dem Lösen der
Feststellvorrichtung bewegt sich die Tischplatte 4 dann nicht und kann nahezu ohne Kraftaufwand nach unten oder oben gefahren
werden.

Die Stange 11 muß im praktischen Anwendungsfall natürlich in
axialer Richtung geführt werden. Diese Axialführungen sind in
den Zeichnungen aus Gründen der Übersichtlichkeit jedoch weggelassen.

Die den Bremsbacken zugewandten Enden der Kniehebel 5a und 5b
sind vorzugsweise mit Spitzen  21a und 21b versehen, welche in
Konen  22a und 22b der Bremsbacken 7a und 7b greifen. Diese Ausgestaltung ermöglicht eine gute Kraftübertragung auf die  Bremsbacken und eine leichte Kippbarkeit der Kniehebel.

In der Fig. 2 sind außer den bereits in der Fig. 1 erläuterten
Einzelteilen noch zwei weitere Axialführungen 8c und 8d für den
Körper 9 zu erkennen. Außerdem sind dort die an dem Innenrohr 3
gelagerten Kugeln 2Oa bis 2Od gezeigt, die an der Innenseite
des Außenrohrs 1 abrollen.

Die Verstellung des Tischs gestaltet sich damit wie folgt:

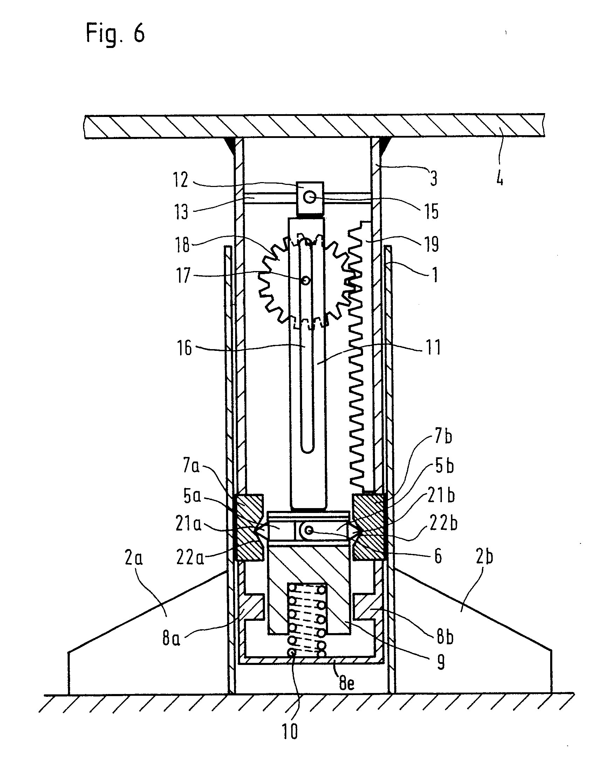

Auf den Arm 15 des zweiarmigen Hebels 12 wird vom Benutzer eine
Kraft in Richtung des Pfeils A (Fig. 3) ausgeübt. Der andere Arm
14 des Hebels 12 bewegt sich somit in Richtung des Pfeils B
nach unten. Diese Abwärtsbewegung wird auf die Stange 11 übertragen welche den Körper 9 entgegen der Kraft der Spiralfeder 10
nach unten drückt.  Dabei macht auch die Kniehebelachse 6 die
Abwärtsbewegung mit. Die Kniehebel 5a und 5b nehmen nunmehr die
in der Fig. 5 gezeigte Stellung ein, d.h. ihre den Bremsbacken
zugewandten Schneiden zeigen nach oben. Die Bremsbacken 7a und 7b
sind nunmehr in radialer Richtung nicht mehr belastet, so daß
sich die Feststellvorrichtung löst. Die Tischplatte 14 kann nun
nach oben oder unten, aus der Position der Fig. 1 nur nach unten,
gefahren  werden. Die von dem Zahnrad 18 auf die Zahnstange 19
übertragene Kraft hält die Tischplatte dabei im Gleichgewicht, so daß ihre Position nahezu ohne Kraftaufwand verstellt werden kann. Besonders wichtig ist dies dann, wenn die Tischplatte ein erhebliches Gewicht besitzt. Im Beispiel der Fig. 6 wurde die Tischplatte fast ganz nach unten gefahren. Wird nun der Arm 15 des Hebels 12 losgelassen, so kehrt der Körper 9 unter der Einwirkung der Feder 10 wieder in seine ursprüngliche Lage zurück. Hierbei spreizen sich die Kniehebel und drücken die Bremsbacken 7a und 7b wiederum gegen das Außenrohr, so daß die Feststellvorrichtung festgesetzt ist. Diesen Zustand zeigt die Fig. 6. Im festgestellten Zustand ist die Bremswirkung nach oben bzw. unten etwa gleich groß.

Zu erwähnen ist noch, daß der Körper 9 und die Stange 11 auch einteilig ausgeführt sein können. Die Druckfeder 10 kann auch ohne weiteres durch ein entsprechendes Bauelement, beispielsweise eine am Hebel 15 eingehängte Zugfeder bei einteiliger Ausführung von Körper 9 und Stange 11, ersetzt werden.

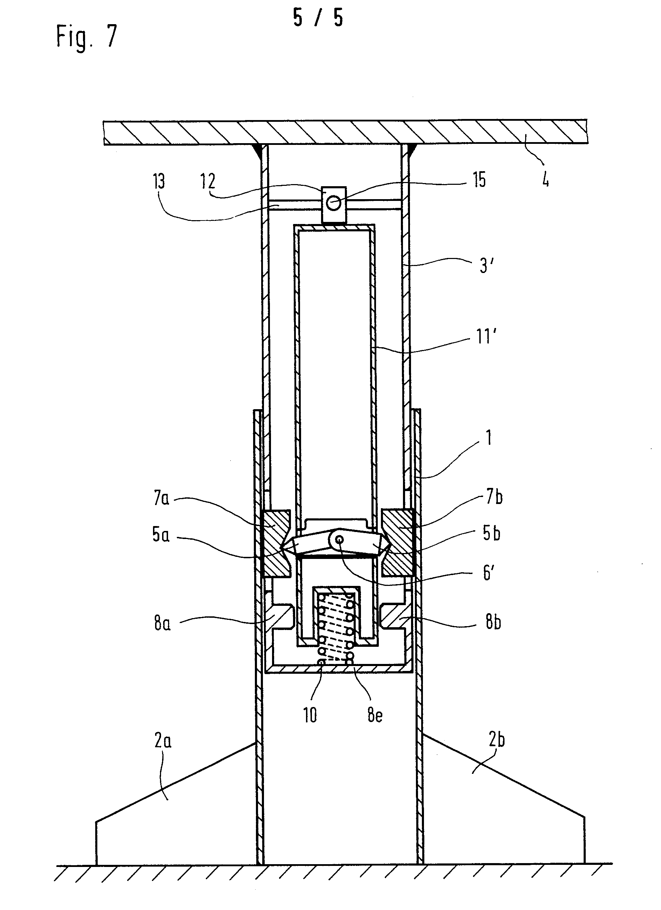

Ein weiteres Ausführungsbeispiel der Erfindung ist in der Fig. 7 gezeigt. Bei dieser Ausführungsform ist die hier mit 6' bezeichnete Kniehebelachse nicht mehr frei beweglich oder an einem Körper gelagert, sondern vielmehr an dem hier mit 3' bezeichneten Innenrohr befestigt oder gelagert. Ein Führungskörper ist nicht vorgesehen. Die Druckfeder 10 wirkt direkt auf das Steuerteil 11'. Sie drückt das Steuerteil also nach oben, wobei dieses in einem gewissen Abstand zum Drehpunkt an den Kniehebeln 5a und 5b angreift und diese spreizt. Die Kniehebel drücken dadurch gegen die Bremsbacken 7a und 7b und pressen diese gegen das Außenrohr 1. Soll die Verriegelung nun gelöst werden, so wird der Hebel 12 ähnlich wie im Ausführungsbeispiel der Fig. 1 bis 6 angekippt, d.h. der Arm 15 wird nach oben gekippt, wodurch der andere, hier nicht gezeigte Arm 14 dieses Hebels eine gemäß Fig. 7 nach unten gerichtete Kraft auf das Steuerteil 11' ausübt. Dieses Steuerteil bewegt sich nun nach unten, so daß die äußeren Enden der Kniehebel 5a und 5b nach unten verschwenkt werden (die Kniehebel-Drehachse 6' bewegt sich hierbei in axialer Richtung nicht, da sie am Innenrohr 3' befestigt oder gelagert ist). Durch die stärkere Verkippung der Kniehebel wird die Kraft auf die Bremsbacken 7a und 7b aufgehoben, so daß der Tisch höhenverstellt werden kann.

Auch mit dieser Ausführungsform ist eine ausreichende Bremswirkung zu erzielen, um die Tischplatte 4 auch bei Belastung zu halten. Die Bremswirkung in der anderen Richtung - also nach oben - ist allerdings nicht so gut wie bei der erstbeschriebenen Ausführungsform, so daß sie vorwiegend dort Verwendung findet, wo kein Gewichtsausgleich durch eine Feder vorgesehen ist, wie dies im Ausführungsbeispiel der Fig. 7 gezeigt ist. Es besteht jedoch die Möglichkeit, die Bremsbacken aus Gummi herzustellen. Mit derartigen, aus Gummi gefertigten Bremsbacken läßt sich eine ausreichende Bremswirkung in beiden Richtungen erzielen, so daß der Einsatz auch bei Möbeln mit Gewichtsausgleich durch Federn möglich ist. Beim Ausführungsbeispiel gemäß Fig. 7 ist noch darauf hinzuweisen, daß die für die Bremsbacken 7a und 7b vorgesehenen Ausschnitte im Innenrohr 3' wesentlich größer bemessen werden müssen als im ersten Ausführungsbeispiel, da sich die Bremsbacken beim Feststellen bzw. Lösen etwas in axialer Richtung bewegen.

Ansprüche
=========

1. Feststellvorrichtung für ineinander verschiebbare Teleskopbeine höhenverstellbarer Möbel, gekennzeichnet durch zwei im Inneren des Innenrohrs (3) angeordnete Kniehebel (5a, 5b), die in der Feststellposition je mindestens eine Bremsbacke (7a, 7b) durch Öffnungen des Innenrohrs (3) gegen das Außenrohr (1) pressen und die durch Verschwenkung in Richtung der Längsachse des Innenrohrs (3) gelöst werden können.

2. Feststellvorrichtung nach Anspruch 1, dadurch gekennzeichnet, daß die Kniehebel (5a, 5b) in ihrem gemeinsamen Drehpunkt auf einer in Längsrichtung des Innenrohrs (3) bewegbaren Achse gelagert sind.

3. Feststellvorrichtung nach Anspruch 2, dadurch gekennzeichnet, daß die Achse (6) in einem längsverschiebbar im Innenrohr (3) geführten Körper (9) gelagert ist.

4. Feststellvorrichtung nach Anspruch 2 oder 3, dadurch gekennzeichnet, daß die Achse (6) oder der Körper (9) durch ein in Längsrichtung des Innenrohrs (3) wirkendes Federelement, vorzugsweise eine Spiralfeder (10), in die Feststellposition gepreßt werden.

5. Feststellvorrichtung nach Anspruch 4, gekennzeichnet durch eine im Innenrohr (3) axial verschiebbare Stange (11) o.dgl., die an der Achse (6) oder dem Körper (10) anliegt und diese oder diesen durch Ausüben einer Kraft in entgegengesetzter Richtung zur Kraftwirkung des Federelementes aus ihrer Feststellposition lösen kann.

6. Feststellvorrichtung nach Anspruch 3 und 5, dadurch gekennzeichnet, daß die axial verschiebbare Stange (11) o.dgl. einteilig mit dem Körper (10) ausgeführt ist.

7. Feststellvorrichtung nach Anspruch 5 oder 6, gekennzeichnet durch einen an dem Innenrohr (3) gelagerten zweiarmigen Hebel (12), dessen einer Arm (15) zur Betätigung der Feststellvorrichtung dient und vorzugsweise mit einem Griff o.dgl. versehen ist, während der andere Arm (14) bei Betätigung auf die Stange (11) o.dgl. eine Kraft in axialer Richtung ausübt.

8. Feststellvorrichtung nach Anspruch 1, dadurch gekennzeichnet, daß die Kniehebel (5a, 5b) in ihrem gemeinsamen Drehpunkt auf einer Achse (6'), die am Innenrohr (3') befestigt oder gelagert ist, gelagert sind und daß ein axial verschiebbares Betätigungsglied, vorzugsweise ein Steuerteil (11') o.dgl.,vorgesehen ist, das an den Kniehebeln (5a, 5b) angreift und diese in ihre Feststellposition bewegen oder aus dieser lösen kann.

9. Feststellvorrichtung nach Anspruch 8, dadurch gekennzeichnet, daß das Betätigungsglied unter der Vorspannung eines an diesem Betätigungsglied und am Innenrohr (3') angreifenden Federelements, vorzugsweise einer Spiralfeder (10), steht.

10. Feststellvorrichtung nach Anspruch 8 oder 9, dadurch gekennzeichnet, daß das Betätigungsglied mit einem Arm eines zweiarmigen Hebels (12) in Kontakt steht, der am Innenrohr (3') gelagert ist und dessen zweiter Arm vorzugsweise mit einem Griff o.dgl. versehen ist.

11. Feststellvorrichtung nach einem der Ansprüche 8 bis 10, dadurch gekennzeichnet, daß die Bremsbacken (7a, 7b) aus Gummi sind.

12. Feststellvorrichtung nach einem oder mehreren der vorhergehenden Ansprüche, dadurch gekennzeichnet, daß die Kniehebel (5a, 5b) auf ihren den Bremsbacken (7a, 7b) zugewandten Seiten mit Spitzen (21a, 21b) versehen sind, die in Konen (22a, 22b) der Bremsbacken (7a, 7b) greifen.

13. Feststellvorrichtung nach einem der vorhergehenden Ansprüche, dadurch gekennzeichnet, daß die Kniehebel (5a, 5b) an den Bremsbacken (7a, 7b) angelenkt sind.

Fig. 1

Fig. 2

Fig. 3

Fig. 4

Fig. 5

3 / 5

0143377

Fig. 6

Fig. 7

0143377

Europäisches
Patentamt

**EUROPÄISCHER RECHERCHENBERICHT**

Nummer der Anmeldung

EP 84 11 3511

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-1 178 243 (MUSIANOWYCZ)<br>* Seite 1, Spalte 2, Zeilen 4-36; Figuren * | 1 | A 47 C 3/28<br>A 47 B 9/08 |
| A | | 2-5,7-10 | |
| | --- | | |
| Y | FR-A-1 541 424 (LAMPERT)<br>* Seite 4, Spalte 1, Zeilen 16-31; Ansprüche; Figuren 10,11 * | 1 | |
| A | | 12,13 | |
| | ----- | | |

| RECHERCHIERTE SACHGEBIETE (Int. Cl.4) |
|---|
| A 47 C<br>A 47 B |

Der vorliegende Recherchenbericht wurde für alle Patentansprüche erstellt.

| Recherchenort | Abschlußdatum der Recherche | Prüfer |
|---|---|---|
| DEN HAAG | 08-02-1985 | VANDEVONDELE J.P.H. |